(19) **Europäisches Patentamt / European Patent Office / Office européen des brevets**

(11) **EP 4 678 596 A1**

(12) **EUROPEAN PATENT APPLICATION**
published in accordance with Art. 153(4) EPC

(43) Date of publication:
**14.01.2026 Bulletin 2026/03**

(21) Application number: **24766985.6**

(22) Date of filing: **28.02.2024**

(51) International Patent Classification (IPC):
*C01B 32/21* (2017.01)          *H01M 4/36* (2006.01)
*H01M 4/587* (2010.01)

(52) Cooperative Patent Classification (CPC):
**C01B 32/21; H01M 4/36; H01M 4/587; Y02E 60/10**

(86) International application number:
**PCT/JP2024/007313**

(87) International publication number:
**WO 2024/185614 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.03.2023 JP 2023033842**

(71) Applicants:
• JFE Chemical Corporation
  Tokyo 111-0051 (JP)
• JFE Steel Corporation
  Tokyo 100-0011 (JP)

(72) Inventors:
• SUTO Mikito
  Tokyo 100-0011 (JP)
• FUSHIWAKI Yusuke
  Tokyo 100-0011 (JP)
• MATSUZAKI Akira
  Tokyo 100-0011 (JP)
• YAMAJI Ryota
  Tokyo 111-0051 (JP)
• HAGA Ryuta
  Tokyo 111-0051 (JP)

(74) Representative: Grünecker Patent- und
  Rechtsanwälte
  PartG mbB
  Leopoldstraße 4
  80802 München (DE)

(54) **CARBON MATERIAL?COATED GRAPHITE PARTICLES, LITHIUM ION SECONDARY BATTERY NEGATIVE ELECTRODE, LITHIUM ION SECONDARY BATTERY, AND PRODUCTION METHOD FOR CARBON MATERIAL?COATED GRAPHITE PARTICLES**

(57) There is provided carbonaceous substance-coated graphite particles that are excellent **in** all of output characteristic, fast charging characteristic, and cycle characteristic when used as a negative electrode material for a lithium ion secondary battery. The carbonaceous substance-coated graphite particles include graphite particles and a carbonaceous substance covering at least part of surfaces of the graphite particles. A mass reduction starting temperature when the carbonaceous substance-coated graphite particles are heated **in** a water vapor atmosphere is 800°C to 980°C, and a content of the carbonaceous substance is 0.1 to 15.0 parts by mass with respect to 100.0 parts by mass of the graphite particles.

EP 4 678 596 A1

**Description**

TECHNICAL FIELD

The present invention relates to carbonaceous substance-coated graphite particles, a negative electrode for a lithium ion secondary battery, a lithium ion secondary battery, and a method of producing carbonaceous substance-coated graphite particles.

BACKGROUND ART

A lithium ion secondary battery includes a negative electrode, a positive electrode, and a non-aqueous electrolyte as main components. Lithium ions move between the negative electrode and the positive electrode in the discharging and charging processes, thereby causing a secondary battery to operate.

Conventionally, carbonaceous substance-coated graphite particles in which the surfaces of graphite particles are coated with a carbonaceous substance have been used as a negative electrode material for a lithium ion secondary battery (Patent Literature 1) in some cases.

CITATION LIST

PATENT LITERATURE

Patent Literature 1: WO 2021/260964

SUMMARY OF INVENTION

TECHNICAL PROBLEMS

It is expected that many lithium ion secondary batteries will be mounted on vehicles (including hybrid vehicles and electric vehicles).

For hybrid vehicles for example, batteries having an excellent output characteristic (fast discharging characteristic) are required because acceleration is important.

For electric vehicles, required are batteries that are excellent in fast charging characteristic and that do not easily deteriorate in terms of capacity even when charging and discharging operation is repeated (that is, excellent in cycle characteristic).

Accordingly, the present invention has an object to provide carbonaceous substance-coated graphite particles that are excellent in all of output characteristic, fast charging characteristic, and cycle characteristic when used as a negative electrode material for a lithium ion secondary battery.

SOLUTION TO PROBLEMS

The inventors found, though an earnest study, that a carbonaceous substance having specific crystallinity can be obtained through optimization of baking conditions in manufacture of carbonaceous substance-coated graphite particles, and as a result the foregoing object can be achieved. Thus, the invention has been completed.

Specifically, the present invention provides the following [1] to [5].

[1] Carbonaceous substance-coated graphite particles, comprising:

graphite particles; and
a carbonaceous substance covering at least part of surfaces of the graphite particles,
wherein a mass reduction starting temperature when the carbonaceous substance-coated graphite particles are heated in a water vapor atmosphere is 800°C to 980°C, and
a content of the carbonaceous substance is 0.1 to 15.0 parts by mass with respect to 100.0 parts by mass of the graphite particles.

[2] The carbonaceous substance-coated graphite particles according to [1] above,
wherein the carbonaceous substance-coated graphite particles are used as a negative electrode material for a lithium ion secondary battery.
[3] A negative electrode for a lithium ion secondary battery, the negative electrode comprising the carbonaceous substance-coated graphite particles according to [1] above.

[4] A lithium ion secondary battery comprising the negative electrode according to [3] above.

[5] A method of producing the carbonaceous substance-coated graphite particles according to [1] above, the method comprising:

attaching a carbonaceous precursor that is a precursor of the carbonaceous substance to the graphite particles to thereby obtain precursor-attached graphite particles,

performing first baking to heat the precursor-attached graphite particles at a temperature of higher than 900°C and not higher than 1,500°C in a non-oxidizing atmosphere,

after the first baking, performing intermediate exposure to expose the precursor-attached graphite particles to an oxidizing atmosphere at a temperature of 50°C to 100°C, and

after the intermediate exposure, performing second baking to heat the precursor-attached graphite particles at a temperature of 1,100°C to 1,500°C in a non-oxidizing atmosphere.

ADVANTAGEOUS EFFECTS OF INVENTION

The present invention makes it possible to provide carbonaceous substance-coated graphite particles that are excellent in all of output characteristic, fast charging characteristic, and cycle characteristic when used as a negative electrode material for a lithium ion secondary battery.

BRIEF DESCRIPTION OF DRAWINGS

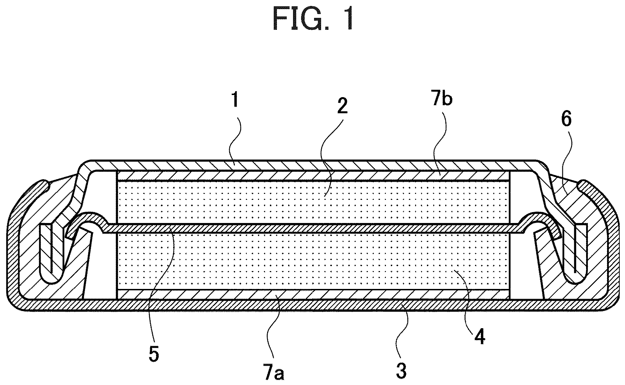

[FIG. 1] FIG. 1 is a cross-sectional view of a battery for evaluation prepared for the evaluation of battery characteristics in Examples and Comparative Examples.

DESCRIPTION OF EMBODIMENTS

In the description, a range expressed using the form of "(numeral) to (another numeral)" should read as a range including both ends defined by the numerals. For example, a range expressed as "A to B" includes A and B.

[Carbonaceous Substance-coated Graphite Particles]

Carbonaceous substance-coated graphite particles of the present embodiment (hereinafter also referred to as "present carbonaceous substance-coated graphite particles") comprise: graphite particles; and a carbonaceous substance covering at least part of surfaces of the graphite particles, wherein a mass reduction starting temperature when the present carbonaceous substance-coated graphite particles are heated in a water vapor atmosphere is 800°C to 980°C, and a content of the carbonaceous substance is 0.1 to 15.0 parts by mass with respect to 100.0 parts by mass of the graphite particles.

When the present carbonaceous substance-coated graphite particles are used as a negative electrode material for a lithium ion secondary battery, the output characteristic, the fast charging characteristic, and the cycle characteristic are all excellent.

<Mass Reduction Starting Temperature>

The mass reduction starting temperature when carbonaceous substance-coated graphite particles are heated in a water vapor atmosphere (also simply referred to as "mass reduction starting temperature") reflects the crystallinity of a carbonaceous substance covering graphite particles, and the higher the mass reduction starting temperature is, the higher the crystallinity is.

The mass reduction starting temperature is not lower than 800°C, preferably not lower than 840°C, and more preferably not lower than 880°C. This configuration leads to an excellent fast charging characteristic and an excellent output characteristic. This is because the conductivity of lithium ions and electrons improves as the crystallinity of a carbonaceous substance covering graphite particles is higher.

Meanwhile, an excessively high mass reduction starting temperature represents too much growth of crystals of a carbonaceous substance. In this case, grain boundaries decrease, and paths allowing lithium ions to disperse to the carbonaceous substance decrease accordingly, resulting in a poorer fast charging characteristic and a poorer output characteristic. Thus, the mass reduction starting temperature is preferably not higher than 980°C, more preferably not higher than 950°C, and still more preferably not higher than 935°C.

The mass reduction starting temperature is determined as follows.

First, carbonaceous substance-coated graphite particles are heated in a water vapor atmosphere. More specifically, thermogravimetric analysis is performed under the conditions below to obtain a graph representing the relation between the mass reduction ratio and the temperature.

The thermogravimetric analysis is performed under the following conditions.

- Device: Steam gasification carbon analyzer CASGa (manufactured by Rigaku Corporation)
- Atmosphere: 20% water vapor-$N_2$ balance (water vapor partial pressure $P_{H2O}$ = 20.2 kPa)
- Temperature rise rate: 10°C/min
- Measurement method: Controlled-rate thermogravimetric analysis method (rate controlled value: 0.001%/sec)

Subsequently, from the obtained graph (mass reduction ratio-temperature graph), the temperature at a mass reduction ratio of 0.50% is read and determined as the mass reduction starting temperature.

The reason for the thermogravimetric analysis being performed in a water vapor atmosphere is as follows.

Carbon is oxidized by an oxidant such as oxygen, carbon dioxide gas, or water vapor at high temperatures and becomes carbon dioxide or carbon monoxide.

At this time, the mass reduction starting temperature of carbon varies depending on the type of the oxidant and the crystallinity of carbon to be oxidized by the oxidant. In other words, in the case where the atmosphere around carbon is not uniform during the thermogravimetric analysis, the mass reduction starting temperature cannot be linked to the crystallinity of carbon.

Among the oxidants mentioned above, water vapor is the most suitable for evaluation of crystallinity of carbon from the viewpoint of handleability, purity, concentration control, and other factors.

Hence, the atmosphere around carbon during the thermogravimetric analysis is specified to be a water vapor atmosphere. Owing to this configuration, the mass reduction starting temperature can be linked to the crystallinity of carbon.

<Carbonaceous Substance Content>

The carbonaceous substance content is not less than 0.1 parts by mass, preferably not less than 0.3 parts by mass, and more preferably not less than 0.5 parts by mass with respect to 100.0 parts by mass of graphite particles for the reason of an excellent cycle characteristic.

At the same time, the carbonaceous substance content is not more than 15.0 parts by mass, preferably not more than 10.0 parts by mass, more preferably not more than 8.0 parts by mass, and still more preferably not more than 5.0 parts by mass with respect to 100.0 parts by mass of graphite particles for the reason of an excellent fast charging characteristic and output characteristic.

The carbonaceous substance content of carbonaceous substance-coated graphite particles is determined in the following manner.

First, a residual carbon ratio of a carbonaceous precursor (described later) is determined. The residual carbon ratio is a ratio (unit: mass%) of the residual amount of a carbonaceous precursor to the feed amount thereof when the same heating history as that of carbonaceous substance-coated graphite particles is applied to the carbonaceous precursor alone to form a carbonaceous substance.

The carbonaceous substance content is obtained based on the determined residual carbon ratio of the carbonaceous precursor and the amount of the carbonaceous precursor added (described later).

For instance, considered is the case where the amount of added carbonaceous precursor having a residual carbon ratio of "34 mass%" is "8.0 parts by mass" with respect to 100.0 parts by mass of graphite particles. In this case, the carbonaceous substance content of carbonaceous substance-coated graphite particles to be obtained should be "2.7 parts by mass" (= 8.0 x 0.34) with respect to 100.0 parts by mass of graphite particles.

For convenience, the carbonaceous substance content with respect to 100.0 parts by mass of graphite particles is hereinafter sometimes simply referred to as "carbonaceous substance content."

<Particle Size>

The particle size of the present carbonaceous substance-coated graphite particles is preferably not less than 5.0 $\mu$m and more preferably not less than 6.5 $\mu$m. At the same time, the particle size of the present carbonaceous substance-coated graphite particles is preferably not more than 15.0 $\mu$m, and more preferably not more than 12.0 $\mu$m.

The particle size is a median diameter at which a cumulative frequency of a particle size distribution obtained with a laser diffraction type particle size distribution analyzer (LMS2000e, manufactured by Seishin Enterprise Co., Ltd.) is 50% by volume.

[Method of Producing Carbonaceous Substance-coated Graphite Particles]

Next, an exemplary method of producing carbonaceous substance-coated graphite particles in the present embodiment (hereinafter also referred to as "present production method") is described.

The present production method is a method of producing the present carbonaceous substance-coated graphite particles described above. In summary, a carbonaceous precursor is attached to graphite particles, whereafter first baking, intermediate exposure, and second baking (hereinafter also collectively called "baking") to be described later are performed in this order.

In the following, graphite particles and a carbonaceous precursor used in the present production method are first described, and then, respective steps in the present production method are described.

<Graphite Particles>

A method of producing graphite particles used in the present production method is not particularly limited, and one example is processing a raw material into a spherical shape.

The raw material here is graphite having a shape other than a spherical shape (including an ellipsoidal shape), such as scale-like graphite. The graphite may be either natural graphite or artificial graphite, while natural graphite is preferred because of high crystallinity or other reasons.

Examples of the method of processing the raw material into a spherical shape (the method of shaping the raw material into a spherical shape) include a method in which the raw material is stirred in the presence of a granulation aid such as an adhesive or a resin, a method in which mechanical external force is applied to the raw material without use of a granulation aid, and a method in which both methods are combined.

Among these, the method in which mechanical external force is applied to the raw material without use of a granulation aid is preferred. This method is described below in more detail.

More specifically, mechanical external force is applied to the raw material (e.g., scale-like graphite) with a pulverizing apparatus to pulverize and granulate the raw material. The raw material is thus shaped into a spherical shape to obtain spherically shaped graphite.

Examples of the pulverizing apparatus include a rotating ball mill, Counter Jet Mill (manufactured by Hosokawa Micron Corporation), Current Jet (manufactured by Nisshin Engineering Inc.), Hybridization System (manufactured by Nara Machinery Co., Ltd.), CF mill (manufactured by UBE Corporation), MECHANO FUSION System (manufactured by Hosokawa Micron Corporation), and Theta Composer (manufactured by Tokuju Corporation), and among these, Hybridization System (manufactured by Nara Machinery Co., Ltd.) is preferred.

In the present production method, it is preferable that a plurality of pulverizing apparatuses be arranged in series and the raw material sequentially pass through the pulverizing apparatuses. In other words, the pulverizing apparatuses are preferably arranged in series such that immediately after passing through one pulverizing apparatus, the raw material is pulverized and granulated in the next pulverizing apparatus.

Here, the number of pulverizing apparatuses is, for example, 2 or more, preferably 3 or more, more preferably 4 or more, still more preferably 5 or more, and particularly preferably 6 or more.

At the same time, the number of pulverizing apparatuses is preferably 10 or less, more preferably 8 or less, and still more preferably 7 or less.

A time for pulverizing and granulating the raw material (hereinafter also referred to as "pulverizing time") in each pulverizing apparatus is preferably not less than 8 minutes, more preferably not less than 13 minutes, and still more preferably not less than 18 minutes.

At the same time, the pulverizing time in each pulverizing apparatus is preferably not more than 60 minutes, more preferably not more than 50 minutes, and still more preferably not more than 40 minutes.

A product of the number of pulverizing apparatuses and the pulverizing time in each pulverizing apparatus (hereinafter also referred to as "total pulverizing time") is preferably not less than 30 minutes, more preferably not less than 50 minutes, and still more preferably not less than 90 minutes.

At the same time, the total pulverizing time is preferably not more than 180 minutes, and more preferably not more than 160 minutes.

The pulverizing apparatus normally includes a rotor built therein.

The rotor in each pulverizing apparatus has a circumferential speed of preferably not less than 30 m/second, more preferably not less than 40 m/second, and still more preferably not less than 60 m/second.

At the same time, the circumferential speed of the rotor in each pulverizing apparatus is preferably not more than 100 m/second, and more preferably not more than 80 m/second.

The amount of the raw material charged into each pulverizing apparatus is preferably small for easier application of sheer force and compression force to the raw material.

<Carbonaceous Precursor>

The carbonaceous precursor is a precursor of the above-mentioned carbonaceous substance and becomes the carbonaceous substance covering the graphite particles by carbonization through baking to be described later.

The carbonaceous precursor is exemplified by tar pitches and/or resins being carbon materials that have low crystallinity compared to graphite and thus would never form a graphite crystal even when subjected to high temperature treatment necessary for graphitization.

Examples of tar pitches include coal tar, tar light oil, tar middle oil, tar heavy oil, naphthalene oil, anthracene oil, coal tar pitch, pitch oil, mesophase pitch, oxygen-bridged oil pitch, and heavy oil.

Examples of resins include polyvinyl alcohol, polyacrylic acid, phenolic resin, furan resin, cellulose resin, polystyrene resin, polyimide resin, and epoxy resin.

Tar pitch, phenolic resin, and the like are preferred in terms of battery characteristics to be obtained.

The carbonaceous precursor is preferably in a powder form for easier spread over surfaces of the graphite particles. The median diameter ($D_{50}$) of the carbonaceous precursor in a powder form is not particularly limited and is, for example, 1 to 50 $\mu$m.

<Preparation of Precursor-attached Graphite Particles>

In the present production method, first, the carbonaceous precursor is attached to the graphite particles. By this process, precursor-attached graphite particles in which the carbonaceous precursor is attached to at least part of surfaces of the graphite particles are obtained.

An example of a method of attaching the carbonaceous precursor to the graphite particles is a method involving mixing the graphite particles with the carbonaceous precursor.

The mixing method is not particularly limited, and an example thereof is a method in which the graphite particles and the carbonaceous precursor being in a powder form or having been heated and melted into a liquid form are mixed using a kneader or another apparatus. In this process, a dispersion liquid in which the graphite particles are dispersed in a dispersion medium may be used. As a kneader, a pressure kneader or a two-roll mill may be used, for example.

<<Amount of Carbonaceous Precursor Added>>

The amount of the carbonaceous precursor added (the amount of the carbonaceous precursor to be attached to the graphite particles) is suitably adjusted in accordance with a desired amount of a carbonaceous substance to be finally obtained.

<Baking>

Next, the obtained precursor-attached graphite particles are subjected to baking (first baking, intermediate exposure, and second baking). By this process, the carbonaceous precursor is carbonized to turn into a carbonaceous substance. Thus, carbonaceous substance-coated graphite particles in which at least part of surfaces of the graphite particles is coated with the carbonaceous substance are obtained.

In this process, the intermediate exposure is performed in an oxidizing atmosphere between the first baking and the second baking that are performed in a non-oxidizing atmosphere, thereby improving the crystallinity of the resulting carbonaceous substance.

<<First Baking>>

In the first baking, the precursor-attached graphite particles are heated at a temperature of higher than 900°C and not higher than 1,500°C (hereinafter also referred to as "first baking temperature") in a non-oxidizing atmosphere.

The reason of the atmosphere for the first baking being a non-oxidizing atmosphere is that the carbonaceous substance would be burned and disappear in an oxidizing atmosphere.

Examples of the non-oxidizing atmosphere include a nitrogen atmosphere, an argon atmosphere, a helium atmosphere, and a vacuum atmosphere. Alternatively, coke breeze which oxidizes by itself may be disposed to decrease an oxygen concentration in the atmosphere to thereby prepare a substantially non-oxidizing atmosphere.

The first baking temperature being too low leads to a low mass reduction starting temperature of the resulting carbonaceous substance-coated graphite particles. Thus, the first baking temperature is higher than 900°C, preferably not lower than 950°C, and more preferably not lower than 1,000°C.

In contrast, the first baking temperature being too high leads to an excessively high mass reduction starting temperature of the resulting carbonaceous substance-coated graphite particles. Thus, the first baking temperature is not higher than 1,500°C, preferably not higher than 1,400°C, and more preferably not higher than 1,250°C.

A time of performing the first baking (a time for which the precursor-attached graphite particles are heated at the first baking temperature in the non-oxidizing atmosphere) is preferably not less than 0.5 hours, more preferably not less than 1 hour, and still more preferably not less than 2 hours. The upper limit thereof is not particularly limited and is for instance 30 hours, preferably 10 hours, and more preferably 5 hours.

The precursor-attached graphite particles having undergone the first baking is preferably cooled to an intermediate exposure temperature (described later) with the atmosphere for the first baking (non-oxidizing atmosphere) being kept.

<<Intermediate Exposure>>

In the intermediate exposure, the precursor-attached graphite particles having undergone the first baking (and then having been cooled) are exposed to an oxidizing atmosphere at a temperature of 50°C to 100°C (hereinafter also called "intermediate exposure temperature").

Examples of the oxidizing atmosphere include an atmosphere containing oxygen, ozone, carbon dioxide, and the like, and the air atmosphere is preferred for the sake of convenience.

The intermediate exposure temperature being too low leads to a low mass reduction starting temperature of the resulting carbonaceous substance-coated graphite particles. Thus, the intermediate exposure temperature is not lower than 50°C, preferably not lower than 55°C, and more preferably not lower than 60°C.

In contrast, the intermediate exposure temperature being too high leads to an excessively high mass reduction starting temperature of the resulting carbonaceous substance-coated graphite particles. Thus, the intermediate exposure temperature is not higher than 100°C, preferably not higher than 90°C, and more preferably not higher than 80°C.

A time of performing the intermediate exposure (a time for which the precursor-attached graphite particles are exposed to the oxidizing atmosphere at the intermediate exposure temperature) is preferably not less than 10 minutes, more preferably not less than 20 minutes, and still more preferably not less than 30 minutes. The upper limit thereof is not particularly limited and is for instance 120 minutes, preferably 90 minutes, and more preferably 60 minutes.

<<Second Baking>>

In the second baking, the precursor-attached graphite particles having undergone the intermediate exposure are heated at a temperature of 1,100°C to 1,500°C (hereinafter also called "second baking temperature") in a non-oxidizing atmosphere.

The reason of the atmosphere for the second baking being a non-oxidizing atmosphere and preferred examples of the non-oxidizing atmosphere are the same as those for the first baking.

The second baking temperature being too low leads to a low mass reduction starting temperature of the resulting carbonaceous substance-coated graphite particles. Thus, the second baking temperature is not lower than 1,100°C, preferably not lower than 1,150°C, and more preferably not lower than 1,200°C.

The second baking temperature is preferably not lower than the first baking temperature.

Meanwhile, the second baking temperature being too high leads to an excessively high mass reduction starting temperature of the resulting carbonaceous substance-coated graphite particles. Thus, the second baking temperature is not higher than 1,500°C, preferably not higher than 1,400°C, and more preferably not higher than 1,300°C.

A time of performing the second baking (a time for which the precursor-attached graphite particles are heated at the second baking temperature in the non-oxidizing atmosphere) is preferably not less than 0.5 hours, more preferably not less than 1 hour, and still more preferably not less than 2 hours. The upper limit thereof is not particularly limited and is for instance 30 hours, preferably 10 hours, and preferably 5 hours.

[Negative Electrode for Lithium Ion Secondary Battery (Negative Electrode)]

A negative electrode for a lithium ion secondary battery in the present embodiment contains the present carbonaceous substance-coated graphite particles described above. The "carbonaceous substance-coated graphite particles" are hereinafter sometimes referred to as "negative electrode material." Besides, the negative electrode for a lithium ion secondary battery is also simply referred to as "negative electrode."

The negative electrode of the present embodiment is prepared as with a general negative electrode.

For preparation of the negative electrode, it is preferable to use a negative electrode mixture preliminarily prepared by adding a binder to the negative electrode material. The negative electrode mixture may contain an active material or an electrically conductive material in addition to the negative electrode material.

For the binder, a binder that is chemically and electrochemically stable against an electrolyte is favorable, and use may be made of, for example, fluororesin such as polytetrafluoroethylene or polyvinylidene fluoride, resin such as polyethylene, polyvinyl alcohol, or styrene butadiene rubber, and carboxymethyl cellulose, while two or more of these can be used in combination.

The binder normally accounts for about 1 to 20 mass% of the total amount of the negative electrode mixture.

More specifically, first, the negative electrode material is optionally adjusted to a desired particle size through classification or the like. Thereafter, the negative electrode material is mixed with the binder, and the resulting mixture is dispersed in a solvent to prepare a negative electrode mixture in a paste form. Examples of the solvent include water, isopropyl alcohol, **N**-methylpyrrolidone, and dimethylformamide. In the mixing and dispersing processes, a known agitator, mixer, kneader, or the like is used.

The prepared paste is applied on one or both of the surfaces of a current collector and dried. The coating weight is preferably 3 to 15 mg/cm$^2$ and more preferably 5 to 15 mg/cm$^2$. This process results in a negative electrode mixture layer (negative electrode) that is uniformly and firmly attached to the current collector. The negative electrode mixture layer has a thickness of preferably 10 to 200 $\mu$m and more preferably 20 to 100 $\mu$m.

After the negative electrode mixture layer is formed, compression bonding such as press pressurization is performed, whereby the adhesion strength of the negative electrode mixture layer (negative electrode) to the current collector can be further improved.

The shape of the current collector is not particularly limited, and examples thereof include a foil-like shape, a mesh shape, and a net-like shape such as an expanded metal shape. The material of the current collector is preferably copper, stainless steel, nickel or the like. The current collector preferably has a thickness of about 5 to 20 $\mu$m in a case of a foil-like shape.

<Coated Electrode Density>

The negative electrode of the present embodiment has a coated electrode density of preferably not less than 1.10 g/cm$^3$ and more preferably not less than 1.20 g/cm$^3$, and at the same time, preferably not more than 2.00 g/cm$^3$ and more preferably not more than 1.90 g/cm$^3$.

The coated electrode density of the negative electrode is determined as described below.

A negative electrode punched out to a given area is measured for mass (with use of an electronic balance) and thickness (with use of a micrometer). Subsequently, 10 pieces of the current collector punched out to the same area are measured for mass, and the average value thereof is specified as the mass of the current collector. Further, the thickness of the current collector is determined from the density of metal constituting the current collector. Then, the coated electrode density of the negative electrode is determined by the following equation.

Coated electrode density of negative electrode = (Mass of negative electrode - Mass of current collector)/(Thickness of negative electrode - Thickness of current collector) $\times$ (Punched out area)

[Lithium Ion Secondary Battery]

A lithium ion secondary battery of the present embodiment includes the negative electrode of the present embodiment and, in addition, components such as a positive electrode and a non-aqueous electrolyte.

The lithium ion secondary battery of the present embodiment is composed of, for example, a negative electrode, a non-aqueous electrolyte, and a positive electrode that are stacked in this order and accommodated in an exterior material.

The type of the lithium ion secondary battery of the present embodiment can be arbitrarily selected from a cylindrical type, a square type, a coin type, a button type, and other types, depending on the intended use, the device to which the battery is to be mounted, the required charging-discharging capacity, or the like.

<Positive Electrode>

For a material of the positive electrode (positive electrode active material), a material that can absorb and store as well as release lithium in a sufficient amount is preferably selected. Examples of the positive electrode active material include, in addition to lithium, a lithium-containing compound such as a lithium-containing transition metal oxide, a transition metal chalcogenide, or a vanadium oxide or a lithium compound thereof; a Chevrel phase compound expressed by General Formula $M_xMo_6S_{8-Y}$ (where M represents at least one transition metal element, X is a numerical value in the range of $0 \leq X \leq 4$, and Y is a numerical value in the range of $0 \leq Y \leq 1$); activated carbon; and activated carbon fiber. The vanadium oxide is expressed by $V_2O_5$, $V_6O_{13}$, $V_2O_4$ or $V_3O_8$.

The lithium-containing transition metal oxide is a composite oxide of lithium and a transition metal, and lithium and two or more transition metals may be mixed to form a solid solution as the lithium-containing transition metal oxide. A single composite oxide may be used alone, or two or more composite oxides may be used in combination.

The lithium-containing transition metal oxide is specifically expressed by $LiM^1_{1-X}M^2_XO_2$ (where $M^1$ and $M^2$ represent at least one transition metal element, and X is a numerical value in the range of $0 \leq X \leq 1$) or $LiM^1_{1-Y}M^2_YO_4$ (where $M^1$ and $M^2$ represent at least one transition metal element, and Y is a numerical value in the range of $0 \leq Y \leq 1$).

The transition metal element represented by $M^1$ and $M^2$ may be Co, Ni, Mn, Cr, Ti, V, Fe, Zn, Al, In, Sn, or the like, with Co, Fe, Mn, Ti, Cr, V, and Al being preferred for instance. Preferred specific examples include $LiCoO_2$, $LiNiO_2$, $LiMnO_2$, $LiNi_{0.9}Co_{0.1}O_2$, and $LiNi_{0.5}Co_{0.5}O_2$.

Using, for example, oxides, hydroxides, and salts of lithium and a transition metal as starting materials, the starting materials are mixed according to the composition of a desired metal oxide and baked in an oxygen atmosphere at a temperature of 600°C to 1,000°C to obtain the lithium-containing transition metal oxide.

For the positive electrode active material, any of the foregoing compounds may be used alone, or two or more thereof may be used in combination. For instance, a carbonate such as lithium carbonate can be added to the positive electrode. When the positive electrode is formed, various additives such as an electrically conductive agent and a binder that are conventionally known can be suitably used.

The positive electrode is prepared by, for example, coating both surfaces of a current collector with a positive electrode mixture comprising a positive electrode active material, a binder, and an electrically conductive agent for imparting electrical conductivity to the positive electrode, to thereby form a positive electrode mixture layer.

For the binder, a binder used in preparation of the negative electrode can be used.

For the electrically conductive agent, a conventionally known electrically conductive agent such as a graphitized substance or carbon black is used.

The shape of the current collector is not particularly limited, and examples thereof include a foil-like shape and a net-like shape. The material of the current collector is aluminum, stainless steel, nickel, or the like. The current collector preferably has a thickness of 10 to 40 μm.

As with the negative electrode, the positive electrode may be prepared by applying the positive electrode mixture in a paste form to the current collector, followed by drying and then compression bonding such as press pressurization.

<Non-aqueous Electrolyte>

The non-aqueous electrolyte may be a liquid non-aqueous electrolyte (non-aqueous electrolytic solution), or a polyelectrolyte such as a solid electrolyte or a gel electrolyte.

As the non-aqueous electrolyte, use is made of a lithium salt which is an electrolyte salt used for an ordinary non-aqueous electrolytic solution, such as $LiPF_6$, $LiBF_4$, $LiAsF_6$, $LiClO_4$, $LiB(C_6H_5)$, $LiCl$, $LiBr$, $LiCF_3SO_3$, $LiCH_3SO_3$, $LiN(CF_3SO_2)_2$, $LiC(CF_3SO_2)_3$, $LiN(CF_3CH_2OSO_2)_2$, $LiN(CF_3CF_2OSO_2)_2$, $LiN(HCF_2CF_2CH_2OSO_2)_2$, $LiN((CF_3)_2CHO-SO_2)_2$, $LiB[\{C_6H_3(CF_3)_2\}]_4$, $LiAlCl_4$, or $LiSiF_6$. From the oxidative stability point of view, $LiPF_6$ and $LiBF_4$ are preferred.

The electrolyte salt concentration in the non-aqueous electrolytic solution is preferably 0.1 to 5.0 mol/L and more preferably 0.5 to 3.0 mol/L.

Examples of a solvent used to prepare the non-aqueous electrolytic solution include a carbonate such as ethylene carbonate, propylene carbonate, dimethyl carbonate, or diethyl carbonate; an ether such as 1,1- or 1,2-dimethoxyethane, 1,2-diethoxyethane, tetrahydrofuran, 2-methyltetrahydrofuran, γ-butyrolactone, 1,3-dioxolan, 4-methyl-1,3-dioxolan, anisole, or diethyl ether; a thioether such as sulfolane or methyl sulfolane; a nitrile such as acetonitrile, chloronitrile, or propionitrile; and an aprotic organic solvent such as trimethyl borate, tetramethyl silicate, nitromethane, dimethylformamide, N-methylpyrrolidone, ethyl acetate, trimethyl orthoformate, nitrobenzene, benzoyl chloride, benzoyl bromide, tetrahydrothiophene, dimethylsulfoxide, 3-methyl-2-oxazolidone, ethylene glycol, or dimethyl sulfite.

When the non-aqueous electrolyte is a polyelectrolyte such as a solid electrolyte or a gel electrolyte, a polymer gelated with a plasticizer (non-aqueous electrolytic solution) is preferably used as a matrix.

For a polymer constituting the matrix, use is suitably made of an ether-based polymer compound such as polyethylene oxide or a crosslinked product thereof; a poly(meth)acrylate-based polymer compound; or a fluorine-based polymer compound such as polyvinylidene fluoride, or vinylidene fluoride-hexafluoropropylene copolymer.

The electrolyte salt concentration in the non-aqueous electrolytic solution that is a plasticizer is preferably 0.1 to 5.0 mol/L and more preferably 0.5 to 2.0 mol/L.

The plasticizer content of the polyelectrolyte is preferably 10 to 90 mass% and more preferably 30 to 80 mass%.

<Separator>

A separator can also be used in the lithium ion secondary battery of the present embodiment.

The material of the separator is not particularly limited, and use is made of, for example, woven fabric, non-woven fabric, and a fine porous film made of synthetic resin. Among these, a fine porous film made of synthetic resin is preferred, and in particular a polyolefin-based fine porous film is more preferred in terms of the thickness, film strength, and film resistance. Suitable examples of the polyolefin-based fine porous film include a polyethylene fine porous film, a polypropylene fine porous film, and a fine porous film formed by combining those.

EXAMPLES

Hereinafter, the present invention will be specifically described with reference to examples. However, the invention is not limited to the examples described below.

<Example 1>

<<Preparation of Graphite Particles>>

Scale-like natural graphite (particle size: 8 $\mu$m) as the raw material was sequentially passed through 4 pulverizing apparatuses (Hybridization system manufactured by Nara Machinery Co., Ltd.) that were installed in series. In each pulverizing apparatus, the pulverizing time was 10 minutes, and the circumferential speed of the rotor was 60 m/second. The raw material was thus pulverized and granulated to obtain graphite particles being spherically-shaped graphite.

<<Preparation of Precursor-attached Graphite Particles>>

A carbonaceous precursor being phenolic resin having been pulverized into a powder form by means of an impact mill was added to the obtained graphite particles (spherically-shaped graphite) and mixed at 25°C for 15 minutes using a drum-type mixer. Thus, precursor-attached graphite particles having the carbonaceous precursor (phenolic resin) attached to surfaces of the graphite particles (spherically-shaped graphite) were obtained.

<<Preparation of Carbonaceous Substance-coated Graphite Particles>>

Next, the obtained precursor-attached graphite particles were put in a graphite container having a lid and subjected to baking (first baking, intermediate exposure, and second baking) using a tubular furnace.

Specifically, firstly in the first baking, an atmosphere (non-oxidizing atmosphere) where nitrogen was circulated at 2 L/min was prepared, and then the precursor-attached graphite particles were heated at a first baking temperature of 1,100°C for 60 minutes and subsequently cooled to an intermediate exposure temperature to be described below without changing the atmosphere.

Next, in the intermediate exposure, the cooled precursor-attached graphite particles were exposed to an air atmosphere (oxidizing atmosphere) at an intermediate exposure temperature of 70°C for 30 minutes.

Thereafter, in the second baking, an atmosphere (non-oxidizing atmosphere) where nitrogen was circulated at 2 L/min was prepared, and then the precursor-attached graphite particles were heated at a second baking temperature of 1,100°C for 60 minutes.

Consequently, the carbonaceous precursor (phenolic resin) turned into a carbonaceous substance, thus obtaining carbonaceous substance-coated graphite particles in which surfaces of the graphite particles (spherically-shaped graphite) were coated with the carbonaceous substance.

Physical properties of the obtained carbonaceous substance-coated graphite particles were determined by the foregoing methods. The results are shown in Table 1 below.

<<Preparation of Negative Electrode>>

To water, 98 parts by mass of the carbonaceous substance-coated graphite particles (negative electrode material), 1 part by mass of carboxymethylcellulose (binder), and 1 part by mass of styrene butadiene rubber (binder) were added and stirred to prepare a negative electrode mixture paste.

The prepared negative electrode mixture paste was applied over copper foil to have a uniform thickness and then dried in vacuum at 90°C to form a negative electrode mixture layer. Next, the negative electrode mixture layer was pressurized at a pressure of 120 MPa by hand press. Thereafter, the copper foil and the negative electrode mixture layer were punched out into a circular shape with a diameter of 15.5 mm. A negative electrode (coated electrode density: 1.50 g/cm$^3$) closely attached to a current collector made of copper foil was prepared in this manner.

<<Preparation of Positive Electrode>>

A positive electrode comprising LiCoO$_2$ (93 mass%), an electrically conductive agent (4 mass%), and a binder (3 mass%) was used. Scale-like graphite particles and styrene butadiene rubber were used as the electrically conductive agent and the binder, respectively.

<<Preparation of Battery for Evaluation>>

As a battery for evaluation, a button-type secondary battery illustrated in FIG. 1 was prepared.

FIG. 1 is a cross-sectional view of a button-type secondary battery. In the button-type secondary battery illustrated in FIG. 1, circumferential portions of an exterior cup 1 and an exterior can 3 are crimped with an insulating gasket 6 being interposed therebetween, whereby a tightly sealed structure is formed. In the tightly sealed structure, a current collector 7a, a positive electrode **4**, a separator 5, a negative electrode 2, and a current collector 7b are stacked in this order from the inner surface of the exterior can 3 toward the inner surface of the exterior cup **1.**

The button-type secondary battery illustrated in **FIG.** 1 was prepared as described below.

First, into a mixed solvent comprising ethylene carbonate (33 vol%) and methylethyl carbonate (67 vol%), $LiPF_6$ was dissolved at a concentration of 1 mol/L to prepare a non-aqueous electrolytic solution. A polypropylene porous body (thickness: 20 $\mu$m) was impregnated with the prepared non-aqueous electrolytic solution to prepare the separator 5 impregnated with the non-aqueous electrolytic solution.

Next, the prepared separator 5 was held between the negative electrode 2 closely attached to the current collector 7b made of copper foil and the positive electrode 4 closely attached to the current collector 7a made of a nickel net, so that they were laminated. Thereafter, the current collector 7b and the negative electrode 2 were accommodated in the exterior cup **1,** while the current collector 7a and the positive electrode 4 were accommodated in the exterior can 3, and the exterior cup 1 and the exterior can 3 were put together. Further, the circumferential portions of the exterior cup 1 and the exterior can 3 were crimped to be tightly sealed with the insulating gasket 6 being interposed therebetween. The button-type secondary battery was prepared in this manner.

Using the prepared button-type secondary battery (battery for evaluation), the battery characteristics were evaluated through the tests described below. The results are shown in Table 1 below.

In the following tests, the process in which lithium ions are adsorbed and stored in the negative electrode material is assumed as charging, and the process in which lithium ions are released from the negative electrode material is assumed as discharging.

<<Test 1: Output Characteristic>>

Constant-current charging was performed at a current value of 0.1C until the circuit voltage reached 1 mV and was thereupon changed to constant-voltage charging. The charging was kept until the current value reached 20 $\mu$A. Based on the amount of current carried during this process, a charging capacity (unit: mAh) was determined. Thereafter, the battery was rested for 10 minutes. Next, constant-current discharging was performed at a current value of 0.2C until the circuit voltage reached 1.5 V. Based on the amount of current carried during this process, an initial discharging capacity (unit: mAh) was determined.

Subsequently, constant-current charging was performed at a current value of 0.1C until the circuit voltage reached 1 mV and was thereupon changed to constant-voltage charging. The charging was kept until the current value reached 20 $\mu$A. Then, the battery was rested for 10 minutes, whereafter constant-current discharging was performed at a current value of 2.0C until the circuit voltage reached 1.5 V. Based on the amount of current carried during this process, a fast discharging capacity (unit: mAh) was determined.

The output characteristic (unit: %) was determined using the obtained discharging capacities, by the following equation:

Output characteristic = 100 $\times$ (Fast discharging capacity/Initial discharging capacity)

<<Test 2: Fast Charging Characteristic>>

Constant-current charging was performed at a current value of 0.1C until the circuit voltage reached 1 mV and was then changed to constant-voltage charging. The charging was kept until the current value reached 20 $\mu$A. Based on the amount of current carried during this process, a charging capacity (unit: mAh) was determined. Thereafter, the battery was rested for 10 minutes. Next, constant-current discharging was performed at a current value of 0.2C until the circuit voltage reached 1.5 V. Based on the amount of current carried during this process, an initial discharging capacity (unit: mAh) was determined.

Next, constant-current discharging was performed at a current value of 2.0C until the circuit voltage reached 1.5 V. Based on the amount of current carried during this process, a fast charging capacity (unit: mAh) was determined.

The fast charging characteristic (unit: %) was determined using the obtained charging capacity, by the following equation:

Fast charging characteristic = 100 $\times$ (Fast charging capacity/Initial discharging capacity)

<<Test 3: Cycle characteristic>>

Constant-current charging was performed at a current value of 0.1C until the circuit voltage reached 1 mV and was thereupon changed to constant-voltage charging. The charging was kept until the current value reached 20 $\mu$A. Based on the amount of current carried during this process, a charging capacity (unit: mAh) was determined. Thereafter, the battery was rested for 10 minutes. Next, constant-current discharging was performed at a current value of 0.2C until the circuit voltage reached 1.5 V. Based on the amount of current carried during this process, a discharging capacity (unit: mAh) was determined.

This charging-discharging operation was repeated 10 times (from the first cycle to the tenth cycle), and the cycle characteristic (unit: %) was determined using the obtained discharging capacities, by the following equation:

Cycle characteristic = 100 $\times$ (Discharging capacity of 10th cycle/Discharging capacity of 1st cycle)

<Example 2>

Carbonaceous substance-coated graphite particles were prepared and evaluated in the same manner as in Example 1 except that the second baking temperature was changed to 1,200°C. The results are shown in Table 1 below.

<Example 3>

Carbonaceous substance-coated graphite particles were prepared and evaluated in the same manner as in Example 1 except that the time of performing the intermediate exposure was changed to 10 minutes. The results are shown in Table 1 below.

<Example 4>

Carbonaceous substance-coated graphite particles were prepared and evaluated in the same manner as in Example 1 except that the carbonaceous substance content was changed to 1.0 parts by mass. The results are shown in Table 1 below.

<Example 5>

Carbonaceous substance-coated graphite particles were prepared and evaluated in the same manner as in Example 1 except that the carbonaceous substance content was changed to 10.0. The results are shown in Table 1 below.

<Example 6>

Carbonaceous substance-coated graphite particles were prepared and evaluated in the same manner as in Example 1 except that the carbonaceous precursor was changed from phenolic resin to coal tar pitch. The results are shown in Table 1 below.

<Comparative Example 1>

Carbonaceous substance-coated graphite particles were prepared and evaluated in the same manner as in Example 1 except that the first baking temperature was changed to 800°C. The results are shown in Table 1 below.

<Comparative Example 2>

Carbonaceous substance-coated graphite particles were prepared and evaluated in the same manner as in Example 1 except that neither the intermediate exposure nor the second baking was performed. The results are shown in Table 1 below.

<Comparative Example 3>

Carbonaceous substance-coated graphite particles were prepared and evaluated in the same manner as in Example 1 except that the second baking temperature was changed to 1,000°C. The results are shown in Table 1 below.

<Comparative Example 4>

Carbonaceous substance-coated graphite particles were prepared and evaluated in the same manner as in Example 1 except that the first baking temperature was changed to 1,600°C. The results are shown in Table 1 below.

<Comparative Example 5>

Carbonaceous substance-coated graphite particles were prepared and evaluated in the same manner as in Example 1 except that the carbonaceous substance content was changed to 0.04 parts by mass. The results are shown in Table 1 below.

<Comparative Example 6>

Carbonaceous substance-coated graphite particles were prepared and evaluated in the same manner as in Example 1 except that the carbonaceous substance content was changed to 16.0 parts by mass. The results are shown in Table 1 below.

<Comparative Example 7>

Carbonaceous substance-coated graphite particles were prepared and evaluated in the same manner as in Example 1 except that the intermediate exposure temperature was changed to 30°C. The results are shown in Table 1 below.

<Comparative Example 8>

Carbonaceous substance-coated graphite particles were prepared and evaluated in the same manner as in Example 1 except that the intermediate exposure temperature was changed to 150°C. The results are shown in Table 1 below.

<Comparative Example 9>

<<Preparation of Graphite Particles>>

Graphite particles being spherically-shaped graphite were obtained in the same manner as in Example 1.

<<Preparation of Precursor-attached Graphite Particles>>

Precursor-attached graphite particles having the carbonaceous precursor (phenolic resin) attached to surfaces of the graphite particles (spherically-shaped graphite) were obtained in the same manner as in Example 1 such that the carbonaceous substance content of carbonaceous substance-coated graphite particles to be finally obtained was 5.0 parts by mass.

<<Preparation of Carbonaceous Substance-coated Graphite Particles>>

The obtained precursor-attached graphite particles were put in a graphite container having a lid and subjected to baking using a tubular furnace.
Specifically, the first baking was performed in the same manner as in Example 1.
Next, the intermediate exposure was performed in the same manner as in Example 1 except that the intermediate exposure temperature was changed to 80°C, thus obtaining an intermediate exposure product.
Subsequently, second attachment of the carbonaceous precursor was performed. More specifically, phenolic resin was attached to the intermediate exposure product under the same conditions as those for <<Preparation of Precursor-attached Graphite Particles>> in Example 1. In this process, phenolic resin was attached such that the carbonaceous substance content of carbonaceous substance-coated graphite particles to be finally obtained was 5.0 parts by mass.
Finally, the second baking was performed in the same manner as in Example 1.
Consequently, the carbonaceous precursor (phenolic resin) turned into a carbonaceous substance, and thus, carbonaceous substance-coated graphite particles in which surfaces of the graphite particles (spherically-shaped graphite) were coated with the carbonaceous substance were obtained. The carbonaceous substance content of the obtained carbonaceous substance-coated graphite particles was 10.0 parts by mass.

Physical properties of the obtained carbonaceous substance-coated graphite particles were determined by the foregoing methods. The results are shown in Table 1 below.

<Comparative Example 10>

<<Preparation of Graphite Particles>>

Graphite particles being spherically-shaped graphite were obtained in the same manner as in Example 1.

<<Preparation of Precursor-attached Graphite Particles>>

Precursor-attached graphite particles were obtained in the same manner as in Example 1.

<<Preparation of Carbonaceous Substance-coated Graphite Particles>>

The obtained precursor-attached graphite particles were put in a graphite container having a lid and subjected to baking using a tubular furnace.

Specifically, first, an atmosphere (non-oxidizing atmosphere) where nitrogen was circulated at 2 L/min was prepared, and then the precursor-attached graphite particles were heated at a first baking temperature of 700°C for 60 minutes.

Thereafter, without cooling (intermediate exposure) and with the atmosphere (non-oxidizing atmosphere) where nitrogen was circulated at 2 L/min being maintained, the particles were heated at a second baking temperature of 1,300°C for 60 minutes.

Consequently, the carbonaceous precursor (phenolic resin) turned into a carbonaceous substance, and thus, carbonaceous substance-coated graphite particles in which surfaces of the graphite particles (spherically-shaped graphite) were coated with the carbonaceous substance were obtained.

Physical properties of the obtained carbonaceous substance-coated graphite particles were determined by the foregoing methods. The results are shown in Table 1 below.

[Table 1]

Table 1

| | | | Example | | | | | | Comparative Example | | | | | | | | | |
| --- | --- | --- | --- | --- | --- | --- | --- | --- | --- | --- | --- | --- | --- | --- | --- | --- | --- | --- |
| | | | 1 | 2 | 3 | 4 | 5 | 6 | 1 | 2 | 3 | 4 | 5 | 6 | 7 | 8 | 9 | 10 |
| Carbonaceous precursor | Type | | Phenolic resin | Phenolic resin | Phenolic resin | Phenolic resin | Phenolic resin | Coal tar pitch | Phenolic resin | Phenolic resin | Phenolic resin | Phenolic resin | Phenolic resin | Phenolic resin | Phenolic resin | Phenolic resin | Phenolic resin | Phenolic resin |
| Baking | First baking | Atmosphere | Nitrogen | Nitrogen | Nitrogen | Nitrogen | Nitrogen | Nitrogen | Nitrogen | Nitrogen | Nitrogen | Nitrogen | Nitrogen | Nitrogen | Nitrogen | Nitrogen | Nitrogen | Nitrogen |
| | | Temp. [°C] | 1100 | 1100 | 1100 | 1100 | 1100 | 1100 | 800 | 1100 | 1100 | 1600 | 1100 | 1100 | 1100 | 1100 | 1100 | 700 |
| | | Time [min] | 60 | 60 | 60 | 60 | 60 | 60 | 60 | 60 | 60 | 60 | 60 | 60 | 60 | 60 | 60 | 60 |
| | Intermediate exposure | Atmosphere | Air | Air | Air | Air | Air | Air | Air | - | Air | Air | Air | Air | Air | Air | Air | - |
| | | Temp. [°C] | 70 | 70 | 70 | 70 | 70 | 70 | 70 | - | 70 | 70 | 70 | 70 | 30 | 150 | 80 | - |
| | | Time [min] | 30 | 30 | 10 | 30 | 30 | 30 | 30 | - | 30 | 30 | 30 | 30 | 30 | 30 | 30 | - |
| | Second attachment of carbonaceous precursor | | - | - | - | - | - | - | - | - | - | - | - | - | - | - | Done | - |
| | Second baking | Atmosphere | Nitrogen | Nitrogen | Nitrogen | Nitrogen | Nitrogen | Nitrogen | Nitrogen | - | Nitrogen | Nitrogen | Nitrogen | Nitrogen | Nitrogen | Nitrogen | Nitrogen | Nitrogen |
| | | Temp. [°C] | 1100 | 1200 | 1100 | 1100 | 1100 | 1100 | 1100 | - | 1000 | 1100 | 1100 | 1100 | 1100 | 1100 | 1100 | 1300 |
| | | Time [min] | 60 | 60 | 60 | 60 | 60 | 60 | 60 | - | 60 | 60 | 60 | 60 | 60 | 60 | 60 | 60 |
| Carbonaceous substance-coated graphite particles | Carbonaceous substance content [parts by mass] | | 2.5 | 2.5 | 2.5 | 1.0 | 10.0 | 2.5 | 2.5 | 2.5 | 2.5 | 2.5 | 0.04 | 16.0 | 2.5 | 2.5 | 10.0 | 2.5 |
| | Mass reduction starting temperature [°C] | | 900 | 920 | 880 | 905 | 898 | 930 | 790 | 770 | 795 | 990 | 915 | 890 | 795 | 985 | 780 | 990 |
| Battery characteristics | Output characteristic [%] | | 968 | 97.5 | 95.2 | 97.1 | 96.1 | 985 | 89.5 | 85.3 | 89.4 | 92.5 | 981 | 84.3 | 90.2 | 86.5 | 84.1 | 91.5 |
| | Fast charging characteristic [%] | | 81.0 | 84.1 | 77.8 | 80.9 | 82.0 | 86.0 | 636 | 60.4 | 64.3 | 72.0 | 82.0 | 73.0 | 636 | 72.0 | 61.2 | 71.3 |
| | Cycle characteristic [%] (10 cycles) | | 89.9 | 90.4 | 89.4 | 88.0 | 93.2 | 92.9 | 83.0 | 83.0 | 84.0 | 85.2 | 82.0 | 92.0 | 83.0 | 86.2 | 90.1 | 84.1 |

EP 4 678 596 A1

<Summary of Evaluation Results>

As shown in Table 1 above, Examples 1 to 6 with the mass reduction starting temperatures being within the range of 800°C to 980°C were excellent in all of output characteristic, fast charging characteristic, and cycle characteristic compared to Comparative Examples 1 to 4, 7, and 8 with the mass reduction starting temperatures being out of the range of 800°C to 980°C.

In Comparative Example 5 with the carbonaceous substance content being less than 0.1 parts by mass, the cycle characteristic was insufficient.

In Comparative Example 6 with the carbonaceous substance content being more than 15.0 parts by mass, the output characteristic and the fast charging characteristic were insufficient.

In Comparative Example 9 where the second attachment of the carbonaceous precursor was performed after the intermediate exposure, the mass reduction starting temperature was lower than 800°C, and the output characteristic and the fast charging characteristic were insufficient.

In Comparative Example 10 where only the first baking and the second baking were performed without the intermediate exposure, the mass reduction starting temperature was higher than 980°C, and the output characteristic, the fast charging characteristic, and the cycle characteristic were insufficient.

[REFERENCE SIGNS LIST]

1: exterior cup
2: negative electrode
3: exterior can
4: positive electrode
5: separator
6: insulating gasket
7a: current collector
7b: current collector

## Claims

1.  Carbonaceous substance-coated graphite particles, comprising:

    graphite particles; and
    a carbonaceous substance covering at least part of surfaces of the graphite particles,
    wherein a mass reduction starting temperature when the carbonaceous substance-coated graphite particles are heated in a water vapor atmosphere is 800°C to 980°C, and
    a content of the carbonaceous substance is 0.1 to 15.0 parts by mass with respect to 100.0 parts by mass of the graphite particles.

2.  The carbonaceous substance-coated graphite particles according to claim 1,
    wherein the carbonaceous substance-coated graphite particles are used as a negative electrode material for a lithium ion secondary battery.

3.  A negative electrode for a lithium ion secondary battery, the negative electrode comprising the carbonaceous substance-coated graphite particles according to claim 1.

4.  A lithium ion secondary battery comprising the negative electrode according to claim 3.

5.  A method of producing the carbonaceous substance-coated graphite particles according to claim 1, the method comprising:

    attaching a carbonaceous precursor that is a precursor of the carbonaceous substance to the graphite particles to thereby obtain precursor-attached graphite particles,
    performing first baking to heat the precursor-attached graphite particles at a temperature of higher than 900°C and not higher than 1,500°C in a non-oxidizing atmosphere,

after the first baking, performing intermediate exposure to expose the precursor-attached graphite particles to an oxidizing atmosphere at a temperature of 50°C to 100°C, and

after the intermediate exposure, performing second baking to heat the precursor-attached graphite particles at a temperature of 1,100°C to 1,500°C in a non-oxidizing atmosphere.

FIG. 1

**EP 4 678 596 A1**

## INTERNATIONAL SEARCH REPORT

<table>
<tr><td>International application No.<br><br>**PCT/JP2024/007313**</td></tr>
</table>

### A. CLASSIFICATION OF SUBJECT MATTER

*C01B 32/21*(2017.01)i; *H01M 4/36*(2006.01)i; *H01M 4/587*(2010.01)i
FI:   C01B32/21; H01M4/36 C; H01M4/587

According to International Patent Classification (IPC) or to both national classification and IPC

### B. FIELDS SEARCHED

Minimum documentation searched (classification system followed by classification symbols)

C01B32/20-32/23; H01M4/00-4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2018-54294 A (KRI, INC.) 05 April 2018 (2018-04-05)<br>       paragraphs [0001]-[0003], [0047]-[0064] | 1-4 |
| A | | 5 |
| X | JP 2018-91749 A (KRI, INC.) 14 June 2018 (2018-06-14)<br>       paragraphs [0001]-[0003], [0052], [0059]-[0063] | 1-4 |
| A | | 5 |
| A | JP 2013-201058 A (TOYOTA MOTOR CORP.) 03 October 2013 (2013-10-03) | 1-5 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 May 2024** | **21 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/007313**

| Patent document cited in search report | | | Publication date (day/month/year) | Patent family member(s) | Publication date (day/month/year) |
|---|---|---|---|---|---|
| JP | 2018-54294 | A | 05 April 2018 | (Family: none) | |
| JP | 2018-91749 | A | 14 June 2018 | (Family: none) | |
| JP | 2013-201058 | A | 03 October 2013 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021260964 A